# FASCICULE DE BREVET EUROPEEN

(11) **EP 0 627 335 B1**
(45) Date de publication et mention de la délivrance du brevet: **28.02.1996**
(21) Numéro de dépôt: 94401120.4
(22) Date de dépôt: 20.05.1994
(51) Int. Cl.: B60K 17/356, B62D 11/18

(54) **Véhicule à transmission hydrostatique et à direction par roues directrices et dérapage**
Fahrzeug mit hydrostatischem Getriebe und Lenkung durch lenkbare Räder und Rutschlenkung
Vehicle with hydrostatic transmission and with steering by steered wheels and skid-steering

(30) Priorité: 24.05.1993 FR 9306126
(43) Date de publication de la demande: 07.12.1994
(73) Titulaire: ETAT FRANCAIS, Représenté par le Délégué Général, pour l'Armement, Paris 7ème (FR)
(72) Inventeur: Marchand, Daniel, F-49100 Angers (FR); Morize, Alain, F-49460 Montreuil-Juigne (FR)

(56) Documents cités:
- EP-A- 0 025 372
- EP-A- 0 236 511
- EP-A- 0 493 206
- DE-A- 4 219 876
- FR-A- 2 467 129

## Description

L'invention concerne les véhicules à roues indépendantes, entraînées par l'intermédiaire de transmissions hydrostatiques de puissance.

Il est connu d'utiliser des transmissions hydrostatiques (pompes à cylindrées variables et moteurs à cylindrées fixes, variables ou étagées) pour l'avancement en ligne droite des véhicules ; la direction se fait alors à l'aide d'un mécanisme, assisté ou non, qui agit mécaniquement sur l'orientation d'une ou de plusieurs paires de roues directrices. Sur des véhicules à roues non directrices, il est également connu d'assurer la direction par dérapage ou "skid-steering", c'est-à-dire par génération de vitesses différentielles de roues, d'un côté à l'autre du véhicule, au moyen de systèmes de freinage ou de dispositifs de direction qui peuvent autoriser un recyclage de la puissance en virage et limiter ainsi les pertes d'énergie.

Sur route, les véhicules à roues directrices présentent l'avantage, notamment dans une configuration à grande vitesse, d'une bonne progression en virage et d'une excellente stabilité qui assure un bon niveau de sécurité. Un inconvénient de ces réalisations se situe en terrains difficiles et se manifeste par une manoeuvrabilité insuffisante, due à l'impossibilité de pivoter sur place ou de décrire des virages très serrés. A l'inverse des véhicules à roues directrices, les véhicules à virage par dérapage présentent l'avantage d'un très bon comportement en tout-terrain mais l'inconvénient d'une mauvaise tenue en direction par dérapage (ou "skid-steering") à grande vitesse, notamment sur route.

L'invention a pour but de fournir des véhicules automobiles à roues indépendantes entraînées par l'intermédiaire de transmissions hydrostatiques, qui puissent être dirigés de façon optimale dans toutes les configurations (tout-terrain, tout-chemin et route) et qui allient à cet effet les avantages des systèmes de direction à roues directrices et de direction par dérapage, avec notamment la possibilité de pivoter au moins approximativement autour du centre de gravité du véhicule, sans en posséder les inconvénients.

Pour atteindre ce but, l'invention a pour objet un véhicule dont chacune des roues indépendantes d'au moins deux paires est entraînée par au moins un moteur hydraulique faisant partie d'une transmission hydrostatique de puissance, l'entrée et la sortie de chaque moteur hydraulique étant reliées respectivement à une canalisation d'alimentation en fluide hydraulique en haute pression et à une canalisation de retour de fluide hydraulique en basse pression, véhicule dans lequel les canalisations d'alimentation et de retour qui sont associées aux moteurs hydrauliques des roues situées sur un premier côté du véhicule (côté gauche par exemple) forment une première boucle en circuit fermé tandis que les canalisations d'alimentation et de retour qui sont associées aux moteurs hydrauliques des roues situées sur le deuxième côté du véhicule (côté droit, dans l'exemple choisi) forment une deuxième boucle en circuit fermé, et dans lequel la transmission hydrostatique de puissance comprend dans chacune des boucles au moins une pompe hydraulique à cylindrée variable dont l'aspiration et le refoulement sont reliés respectivement à la canalisation de retour et à la canalisation d'alimentation de la boucle considérée ; caractérisé en ce que le véhicule comprend au moins une paire de roues directrices et des moyens permettant de relier, par des passages de sections respectives réglables, ou d'isoler l'une de l'autre d'une part les canalisations d'alimentation des deux boucles et d'autre part les canalisations de retour des deux boucles et en ce que le véhicule comprend en outre des moyens permettant de régler les cylindrées respectives des pompes hydrauliques de façon identique pour la configuration de progression en ligne droite ou en virage par roues directrices et de manière différentielle pour la configuration de progression en virage par dérapage, par mixage des deux types de direction, ou pour la configuration de pivot autour du centre de gravité du véhicule.

Dans ce qui précède, on a désigné par "canalisation d'alimentation" et "canalisation de retour" les canalisations qui jouent effectivement ce rôle lorsque le véhicule reçoit son énergie de la génération de puissance et circule en marche avant. Les rôles respectifs de ces canalisations peuvent naturellement être intervertis de façon connue lorsque le véhicule circule en décélération (la transmission travaillant alors en retenue) ou en virage (les rôles respectifs des canalisations sont alors intervertis sur la boucle qui relie les moteurs hydrauliques placés sur le côté intérieur).

De cette façon, l'invention permet d'avoir recours à la direction par dérapage pour le pivotement du véhicule autour de son centre de gravité et pour les faibles rayons de virage en tout-terrain, par isolement des deux boucles de la transmission et variation, de façon connue et différentielle, des cylindrées de leurs pompes respectives. L'invention permet de faire appel aux roues directrices sur route, par exemple à vitesse élevée, après pleine ouverture des susdits passages. L'invention permet enfin le mixage des deux types de direction simultanément ou successivement dans des zones de fonctionnement intermédiaires, par orientation des roues directrices et par ouverture des susdits passages à des sections réglées, simultanées à la variation différentielle des cylindrées des pompes pour satisfaire le besoin d'un effort complémentaire de virage par dérapage.

Il est à noter que l'on a déjà proposé d'associer, sur un véhicule automobile à roues motrices non indépendantes par côté, les deux principes de direction par mixage d'un braquage limité et d'un dérapage contrôlé mais la solution proposée (voir le document EP-A-0 413 206) fait intervenir une transmission mécanique à différentiel et n'est pas transposable aux transmissions hydrostatiques sur le plan de la réalisation et sur le plan des avantages et des inconvénients.

L'invention a également pour but, dans un véhicule ainsi agencé, d'autoriser des modes de fonctionnement en nombre de roues motrices réduit en isolant automatiquement de la transmission hydrostatique le moteur ou les moteurs de la ou des roues déficientes en débrayant mécaniquement et en isolant hydrauliquement une ou plusieurs paires de roues intentionnellement et sélectivement afin d'optimiser les conditions fonctionnelles de la transmission (rendements, fiabilité, etc.) selon les configurations rencontrées.

A cet effet, le véhicule selon l'invention est caractérisé en outre en ce que les roues motrices sont mécaniquement et hydrauliquement débrayables, chaque roue pouvant être désolidarisée du reste de la transmission par des dispositifs mécaniques internes ou externes au moteur hydraulique qui est précédé et suivi d'un isolateur hydraulique de façon à l'isoler automatiquement lorsque la roue entraînée par ce moteur ou ce moteur lui-même devient déficient ou lors d'une intention de réduire le nombre de paires de roues motrices. La mise en roue libre de la roue est assurée par tout dispositif de débrayage placé sur la liaison mécanique de la transmission à la roue ou réalisée directement dans le moteur hydraulique lui-même.

L'invention a également pour but de diminuer la largeur du véhicule ou d'augmenter le volume disponible dans la caisse du véhicule.

A cet effet, le débattement angulaire des roues directrices, à partir de l'axe longitudinal du véhicule, est limité par rapport à ce qui est habituellement rencontré pour des véhicules classiques ayant les mêmes exigences de manoeuvrabilité et l'intégration des moteurs hydrauliques dans les roues libère un volume important occupé habituellement par des organes mécaniques des transmissions classiques.

L'invention a également pour but de réduire les pertes des organes de servitude destinés aux fonctions gavage de la transmission hydrostatique.

A cet effet, le véhicule est caractérisé en outre en ce qu'un complément de gavage est apporté par une deuxième pompe et ne fonctionne sous pression que lorsque le besoin en gavage est important, le niveau de pression de cette pompe étant détaré le reste du temps, ou encore en ce que le complément de gavage est apporté par une pompe déjà installée sur le véhicule pour une autre fonction, la pompe d'alimentation du ou des moteurs d'entraînement des ventilateurs par exemple.

De préférence enfin, la commande de la transmission complète, des susdits moyens et de l'orientation des roues directrices est gérée et pilotée par au moins un micro-processeur à l'aide d'un ou de plusieurs logiciels adaptés.

L'invention sera mieux comprise à la lumière de la description suivante, en rapport avec les dessins annexés, illustrant de façon non limitative divers modes de réalisation de l'invention.

Les dessins représentent de façon schématique :
- à la figure 1, un véhicule conforme à un premier mode de réalisation de l'invention, dont les moteurs hydrauliques sont logés dans les roues ;
- à la figure 2, un véhicule conforme à un deuxième mode de réalisation de l'invention, dont les moteurs hydrauliques munis de réducteurs débrayables sont logés dans la caisse du véhicule ;
- à la figure 3, un véhicule conforme à un troisième mode de réalisation de l'invention, dont les quatre roues arrière sont agencées selon le premier mode de réalisation de l'invention et dont les quatre roues avant sont entraînées au travers d'un réducteur de roue par un récepteur hydraulique réalisé par le couplage mécanique et hydraulique d'un premier moto-réducteur débrayable et d'un second moteur hydraulique rapide, lui-même représenté à la figure 7 ;
- à la figure 4, les éléments essentiels de la transmission du véhicule de la figure 1 dans une configuration générale ou plus particulière de direction mixte ;
- à la figure 5, la représentation de la figure 4 dans une configuration à roues directrices qui permet de répartir les débits sur chaque moteur hydraulique en tenant compte des différences de vitesse de chaque roue directrice engendrées par l'orientation des roues ;
- à la figure 6, la représentation de la figure 4 dans une configuration en virage par dérapage ou "skid-steering" ;
- aux figures 7 à 9, des schémas de diverses variantes ou compléments apportés aux modes de réalisation précédents.

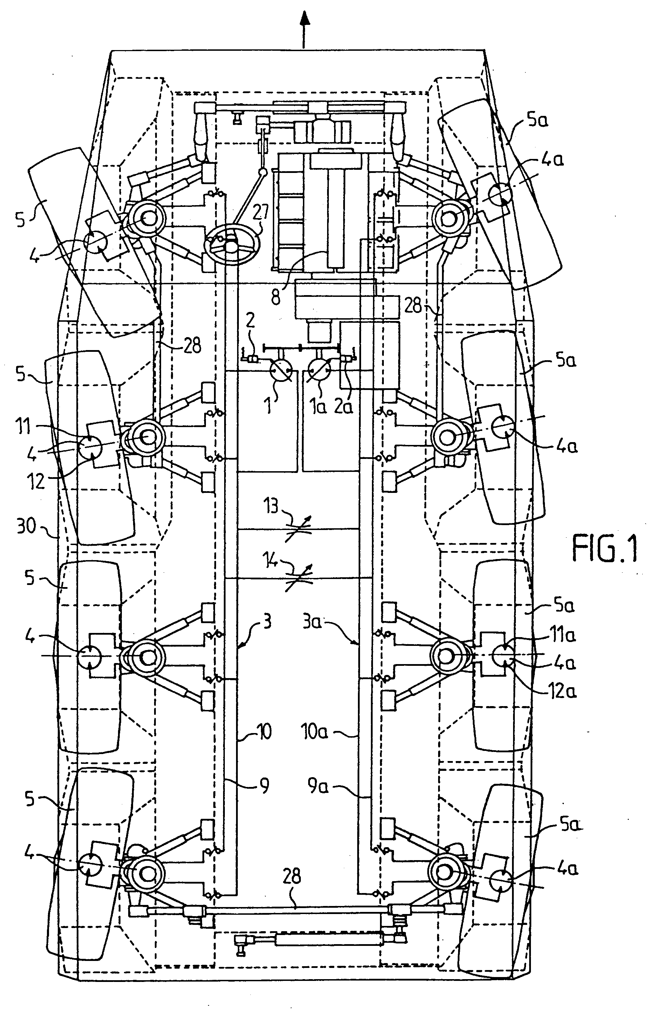

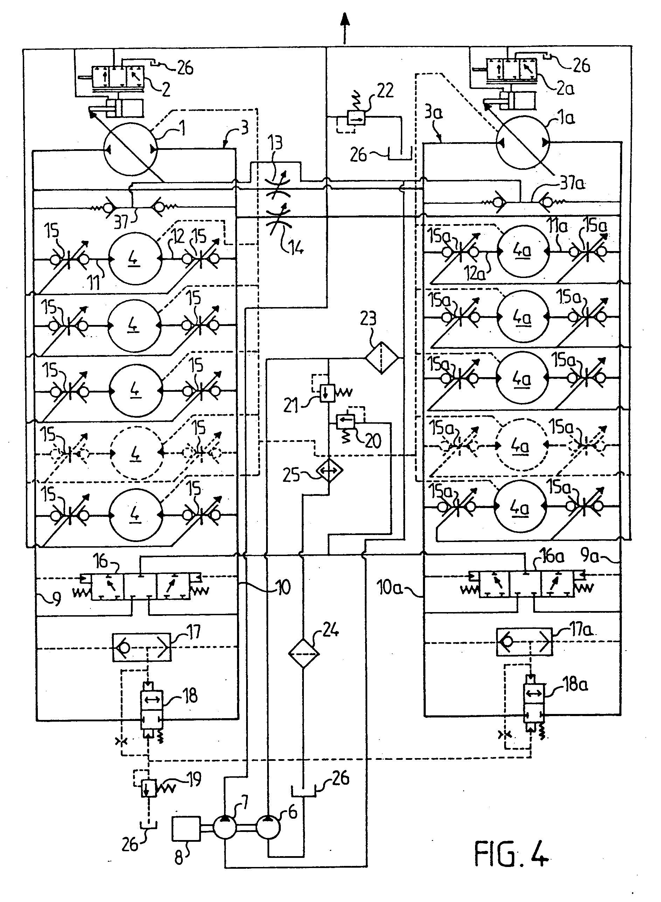

En référence aux figures 1 et 4, la transmission d'un véhicule comprend deux pompes ou deux groupes de pompe 1 et 1a à cylindrée continûment variable dans les deux sens de débit, pilotées par des moyens de distribution à tiroirs-poursuite 2 et 2a, déplacés par actionneurs électriques et assistés hydrauliquement par servo-vérins. Pour simplifier la description, on désignera par "pompe" 1 ou 1a aussi bien une pompe qu'un groupe de pompes. Par des boucles hydrauliques 3 et 3a en circuit fermé, ces pompes 1 et 1a distribuent les débits de fluide hydraulique à n moteurs hydrauliques 4 et 4a entraînant chacun une roue 5 ou 5a (non montrée à la figure 4). Les pompes 1, 1a, les moteurs 4, 4a et les boucles 3 et 3a constituent des circuits symétriques associés respectivement au côté gauche et au côté droit du véhicule. Les éléments situés du côté droit se distinguent des éléments situés du côté gauche par le fait qu'ils sont accompagnés de la lettre "a". Les pressions établies sont le résultat des exigences au niveau des moteurs hydrauliques. A simple titre d'exemple, on a supposé que n était égal à 2 x 4 à la figure 1 et à 2 x 5 à la figure 4.

Des pompes 6 et 7 (figure 4) gavent respectivement le (les) circuit(s) et fournissent les débits et la pression de commande nécessaire au fonctionnement des différents systèmes : commande de cylindrée des pompes et des moteurs hydrauliques, régulation et séparation des circuits, commande de freins etc... Les pompes 1, 1a, 6 et 7 sont entraînées par une génération de puissance telle qu'un moteur à combustion interne 8 ou une turbine à gaz.

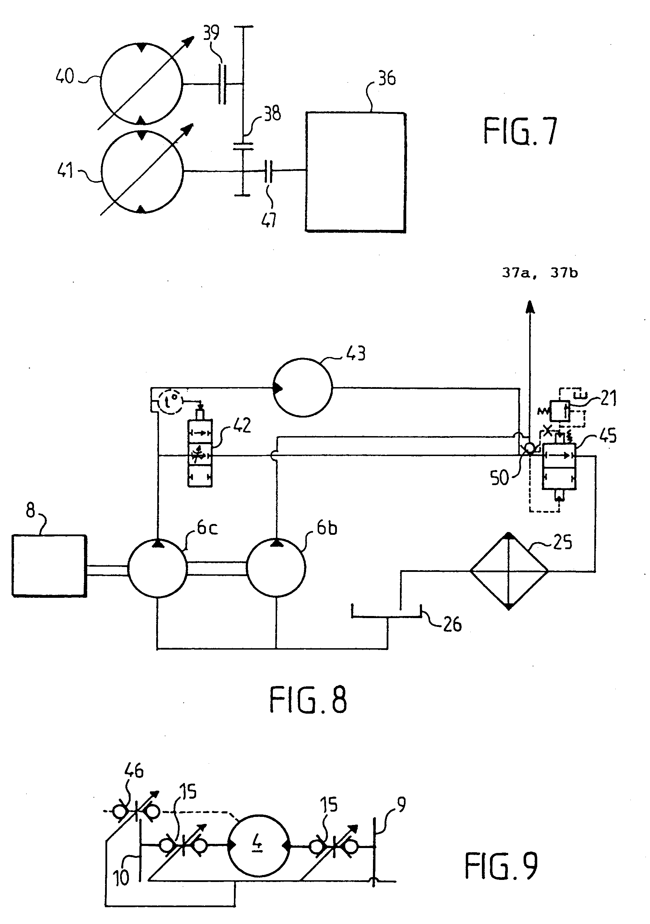

En référence à la figure 8, la pompe de gavage 6 est remplacée par un kit d'au moins deux pompes 6b et 6c qui permet de réduire l'excédent du débit de gavage par le retour du débit d'une des pompes directement à un réservoir 26. C'est le cas de la figure 8 dans laquelle on aurait supprimé le moteur hydraulique de ventilation 43 et la vanne thermostatique 42 qui seront décrits ci-après. La pompe 6b débite en permanence vers des sélecteurs de gavage 37 et 37a sous la pression de gavage définie par la valeur de tarage du limiteur de pression. La pompe 6c débite en amont d'un clapet anti-retour 50 placé immédiatement avant un organe sélecteur 45. Suivant le niveau de la pression de gavage, le sélecteur 45 est piloté ou non et le débit de la pompe 6c est soit dirigé vers le réservoir 26 avec un niveau de pression réduit aux pertes de charge de ce circuit, soit dirigé vers le circuit de gavage à la pression de gavage. Cette pompe 6c représentée sur la figure peut être une pompe déjà installée sur le véhicule pour une autre fonction et ne servir de complément de gavage que lorsque le besoin l'impose. En l'occurrence, la pompe 6c est la pompe d'alimentation du ou des moteurs d'entraînement des ventilateurs de refroidissement. La pompe 6c alimente à plein débit, en débit partiel, ou n'alimente pas le moteur hydraulique 43 d'entraînement de ventilateur selon la position de la vanne thermostatique 42, elle-même pilotée par la température du circuit. Son débit, soit après l'entraînement du moteur 43, soit directement par passage au travers de la vanne thermostatique 42, soit provenant de la somme des débits dérivés arrive en amont du clapet anti-retour placé juste avant le sélecteur 45, et est dirigé vers le gavage ou vers le réservoir 26 comme précédemment.

Chaque boucle 3, 3a (figures 1 et 4) est formée d'une canalisation d'alimentation en haute presion 9, 9a et d'une canalisation de retour en basse pression 10, 10a (les rôles respectifs de ces canalisations étant intervertis en décélération du véhicule et donc en retenue sur la transmission et sur la boucle intérieure au virage en "skid-steering" ou en virage par direction mixte. L'entrée 11 ou 11a de chaque moteur 4, 4a est reliée à la canalisation d'alimentation 9, 9a de la boucle 3, 3a située du même côté du véhicule. La sortie 12 ou 12a de chaque moteur 4, 4a est reliée à la canalisation de retour 10, 10a de la boucle 3, 3a située du même côté du véhicule. Les pompes 1 et 1a refoulent respectivement dans les canalisations d'alimentation 9 et 9a et les aspirations de ces pompes 1 et 1a sont reliées respectivement aux canalisations de retour 10 et 10a.

Les boucles de gauche 3 et de droite 3a définies ci-dessus peuvent être à volonté reliées ou séparées par deux organes 13, 14 reliés respectivement à des côtés opposés des pompes 1 et 1a symétriques l'un de l'autre. Plus précisément, l'organe 13 est monté entre les canalisations d'alimentation 9, 9a et l'organe 14 entre les canalisations de retour 10, 10a. Ces organes 13, 14 qui, lorsqu'ils sont ouverts, assurent des passages de sections respectives réglables, sont pilotés électriquement et gérés par un micro-processeur central (non représenté) et ils permettent, ainsi qu'il sera expliqué ci-après, le passage d'une configuration "tout-terrain" en virage par dérapage à une configuration "route" en virage par roues directices. La combinaison des deux configurations, qui conduit à une direction hybride, sera possible dans le cas de braquages intermédiaires des roues avec une aide supplémentaire au virage par dérapage par orientation réduite des roues. Les organes 13, 14 sont alors en position intermédiaire de fermeture. La fermeture sera progressive et gérée proportionnellement au besoin en couple complémentaire.

Des régulateurs 15 et 15a, associés à chacun des moteurs 4 et 4a respectivement, ont trois fonctions principales : une fonction de coupleur, une fonction d'isolateur du circuit et une fonction de régulateur pour gérer le couple sur chaque roue indépendante 5, 5a et éviter un excès de patinage, compte tenu de l'adhérence de chaque roue et de son besoin en couple. Ces régulateurs 15, 15a doivent présenter une caractéristique de pertes de charge très faibles en position ouverte. Des isolateurs 46, de technologie plus ordinaire, représentés à titre d'exemple à la figure de détail 9, seront montés sur les drains de façon à isoler les moteurs hydrauliques du circuit de fuite en cas de déficience des roues ou de dépose de ces dernières.

Les n moteurs hydrauliques 4, 4a (un moteur par roue pour l'exemple des figures 1 et 4) sont à plusieurs cylindrées étagées et disposent de moyens de sélection des cylindrées (non représentés). Ils sont caractérisés par des moyens de mise en roue libre, c'est-à-dire de débrayage mécanique permettant de maintenir les pistons rentrés dans leurs cylindres, et présentent de plus des caractéristiques de faible inertie, notamment par rapport à des composants hydrauliques qui, associés à des réducteurs, sont placés plus en amont sur la chaîne cinématique.

Les pompes 1, 1a sont à cylindrée continûment variable et permettent la continuité de la vitesse du véhicule à chaque changement de palier de cylindrée des moteurs 4, 4a, par réajustement rapide du débit, grâce au déplacement, à la position adéquate, du plateau des pompes (puisqu'il s'agit, dans l'exemple choisi, d'une technologie de pompes à plateau).

Un bloc d'échange et de surpression est constitué d'éléments 16 et 16a faisant office de tiroirs d'échange de l'excédent de gavage, de sélecteurs de haute pression 17 et 17a, d'organes 18 et 18a de mise en communication de la HP (haute pression) à la BP (basse pression) et d'un élément de limitation de haute pression 19, unique pour les deux circuits.

Les limitations de pression sont assurées sur l'excédent de gavage par un organe 20, sur le gavage par un moyen de limitation 21 et sur le pilotage par un système 22. La pompe de pilotage 7 prend son aspiration sur le refoulement de la pompe de gavage 6.

Des éléments 23 et 24, munis ou non de moyens de passage direct de débit et de systèmes d'indication de colmatage, assurent la filtration des circuits. L'élément 24 reçoit en particulier la pollution due au système de freinage qui est de préférence balayé par l'huile du circuit hydraulique. Le dispositif de freinage préféré est un système à multi-disques à bain d'huile intégré dans la roue. Son refroidissement est assuré par le circuit général de la transmission, lui-même refroidi par son propre dispositif 25. Ce dispositif 25 sert au refroidissement du circuit et permet de maintenir un seuil de température en dissipant la chaleur.

On a représenté en plusieurs endroits à la figure 4, le réservoir de fluide hydraulique 26.

Enfin, le véhicule comprend au moins une paire de roues directrices. A la figure 1, on a supposé que les première, deuxième et quatrième paires de roues 5, 5a (en partant de l'avant du véhicule, qui est le haut de la figure) étaient directrices et actionnées par exemple à l'aide d'un volant 27 et d'une tringlerie 28 de type usuel dans des directions de ce type ou de tout autre dispositif.

Selon le mode de réalisation de la figure 1, chaque roue motrice 5, 5a est équipée d'un moteur hydraulique 4, 4a logé dans cette roue.

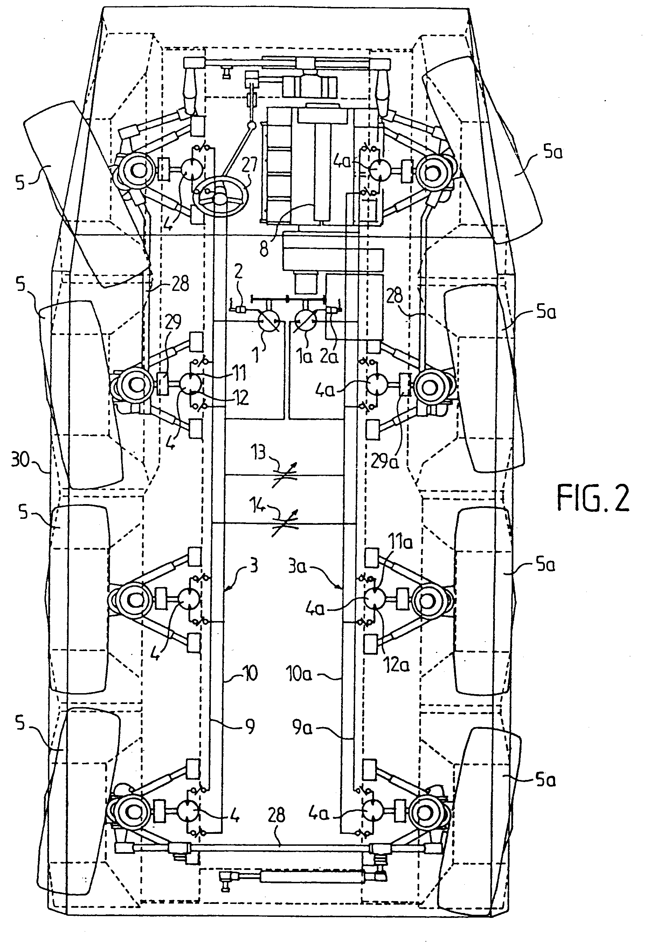

Le mode de réalisation de la figure 2 diffère de celui de la figure 1 par le fait que le moteur 4, 4a de chaque roue motrice 5, 5a est muni d'un réducteur débrayable 29, 29a et est logé avec celui-ci dans la caisse 30 du véhicule.

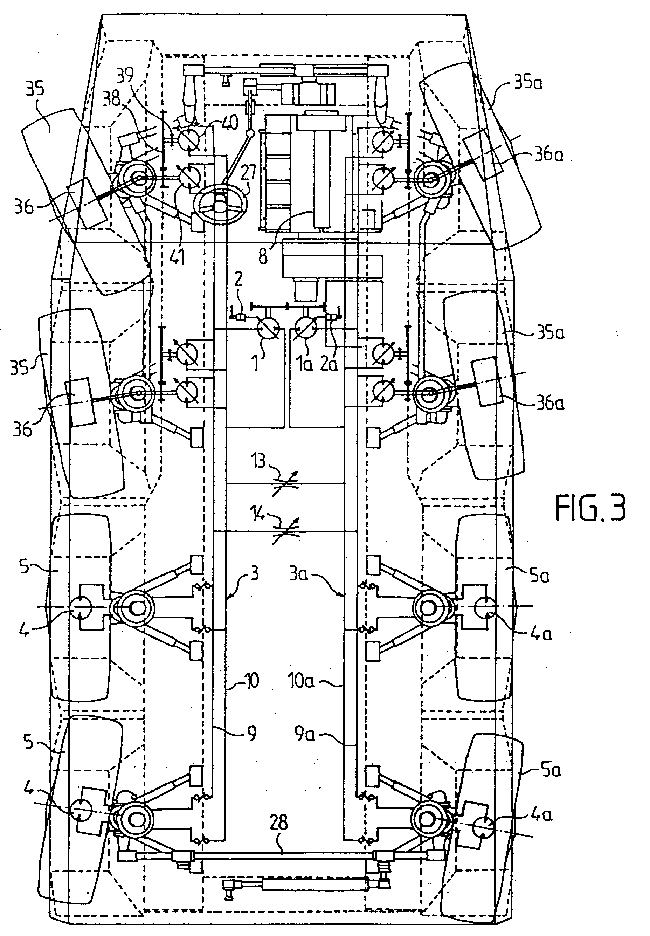

Le mode de réalisation de la figure 3 diffère de celui de la figure 1 par le fait que seules deux paires de roues 5, 5a sont agencées selon l'invention, les deux autres paires de roues 35, 35a étant entraînées de façon originale au travers d'un réducteur de roue 36, 36a par le couplage d'un moto-réducteur hydraulique débrayable à un second moteur hydraulique.

Le fonctionnement de l'ensemble de la transmission hydrostatique qui vient d'être décrite, va être exposé à l'aide d'un exemple précis de réalisation.

Dans cet exemple, la cylindrée maximale de chacune des pompes principales 1, 1a est de 285 cm³/tr et celle de chacun des moteurs hydrauliques 4, 4a de 3 600 cm³/tr. La cylindrée des moteurs hydrauliques 4, 4a varie par paliers et prend les valeurs suivantes :
3 600 cm³/tr - 1 800 cm³/tr - 876 cm³/tr - 438 cm³/tr.

En fonctionnement à couple maximal, la cylindrée des moteurs hydrauliques 4, 4a est de 3 600 cm³/tr et la pression est maximale. En avancement du véhicule en ligne droite, la vitesse est limitée, compte tenu de la puissance installée ; la cylindrée des pompes 1, 1a est réduite. L'augmentation de la vitesse du véhicule se fait par augmentation des cylindrées des pompes 1, 1a jusqu'à leur cylindrée maximale. Pour assurer à nouveau la montée en vitesse du véhicule, il faut d'abord réduire la cylindrée des moteurs hydrauliques 4, 4a à 1 800 cm³/tr. A cette première réduction de cylindrée des moteurs 4, 4a va correspondre une réduction de moitié de la cylindrée des pompes 1, 1a, aux différences de rendement près, si la vitesse d'entraînement par la génération de puissance 8 reste constante. Ainsi à ce changement de cylindrée des pompes 1, 1a, simultané à celui des moteurs 4 et 4a, la vitesse du véhicule reste invariable. Pour poursuivre la montée en vitesse du véhicule, on augmente la cylindrée des pompes 1, 1a à nouveau jusqu'au prochain palier qui correspond à la cylindrée maximale de ces pompes. Les paliers suivants seront franchis de la même manière jusqu'à la vitesse maximale du véhicule pour laquelle la cylindrée des moteurs hydrauliques 4, 4a est minimale (438 cm³/tr) et la cylindrée des pompes 1, 1a maximale (285 cm³/tr). Le rôle des organes de séparation 13, 14 est exposé ci-après.

Dans l'exemple numérique considéré, le couple maximal sur chaque roue 5, 5a peut atteindre 2 500 m.daN et la vitesse maximale des roues atteinte est de 500 tr/min.

Les régulateurs 15 et 15a servent :
- de coupleurs en cas de dépose d'un ou de plusieurs moteurs hydrauliques 4, 4a et permettent, grâce à un système d'auto-obturation, de ne pas vidanger le(s) circuit(s) pendant cette dépose ;
- d'isolateurs en cas de détérioriation d'un (ou de plusieurs) moteur(s) hydraulique(s) 4, 4a (défaillance mécanique ou détérioriation pour toute autre cause) ; ce même dispositif assure la fermeture du circuit et isole le moteur hydraulique déficient, en permettant au véhicule de se déplacer en mode dégradé ou de réduire le nombre de roues motrices et de les choisir pour mieux s'adapter à la configuration ; c'est ce qui a été schématisé aux figures 4, 5 et 6 par la représentation en pointillé de deux des moteurs 4, 4a ainsi isolés et des régulateurs 15, 15a qui leur sont associés ;
   un autre coupleur isolateur 46, représenté à la figure 9, dont la taille est plus petite et qui peut être éventuellement de technologie plus simple puisqu'il n'a pas les mêmes exigences de pertes de charge faibles et de régulation, est monté sur la canalisation des fuites et vient s'ajouter aux moyens 15 et 15a pour la dépose ou l'isolation des moteurs 4, 4a ;
- de régulateurs pour une meilleure gestion du couple sur chaque roue et notamment dans le cas de patinage, le composant 15 ou 15a limitant le débit par obstruction partielle de l'orifice de passage afin de rétablir la pression sur le circuit principal et d'installer le couple sur chacune des roues indépendantes 5, 5a en fonction de leurs besoins propres.

Ces organes 15, 15a, voire 46, de régulation, de couplage-découplage et d'isolement sont à passage direct, ce qui évite les pertes de charge lorsqu'ils sont en pleine ouverture.

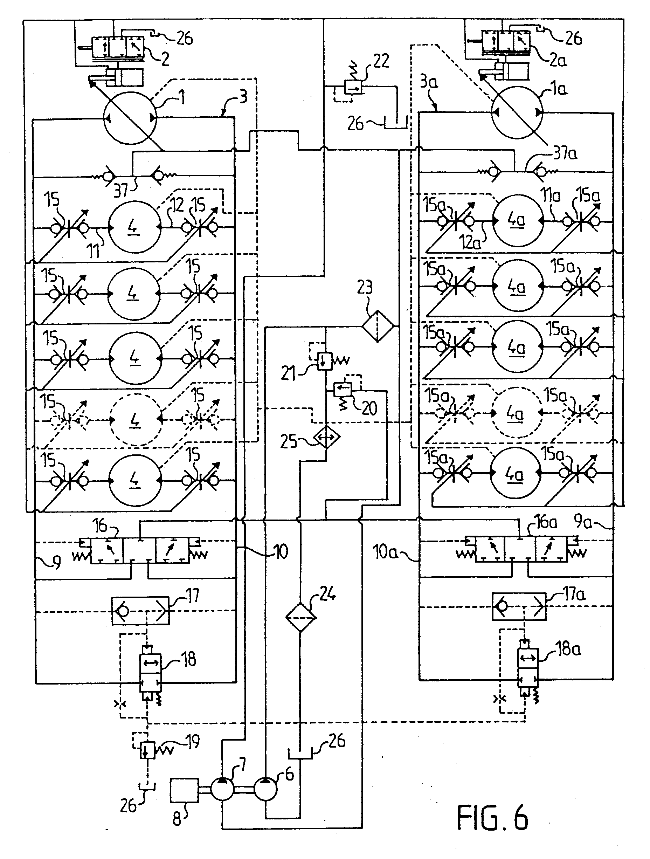

La figure 6 est donnée en illustration de cet exemple dans une configuration de virage par dérapage (en tout-terrain par exemple) ou en pivot autour de son centre de gravité. Les organes 13, 14 des figures 1 et 4 sont alors totalement fermés et la transmission fonctionne sur deux circuits hydrauliques identiques, indépendants et symétriques, gavés, pilotés, refroidis, filtrés et protégés par des moyens de servitude communs. Selon la représentation de la figure 6, tout se passe comme si les organes 13, 14 et les liaisons hydrauliques reliant les boucles principales 3 et 3a avaient disparu et c'est pourquoi ces organes ont été omis sur cette figure.

Pour changer de direction, il faudra commander aux pompes 1, 1a une variation de cylindrée progressive et différentielle, en plus sur le circuit relié au côté extérieur du virage et en moins sur le circuit relié au côté intérieur, afin d'augmenter et de réduire les débits sur les moteurs hydrauliques 4, 4a qui sont placés respectivement à l'extérieur et à l'intérieur du virage. En fait, à chaque point de fonctionnement d'avancement en ligne droite, peut correspondre un point de fonctionnement en virage créé par un écart de cylindrée des pompes, équivalent ou non, autour de la valeur affichée des cylindrées en ligne droite.

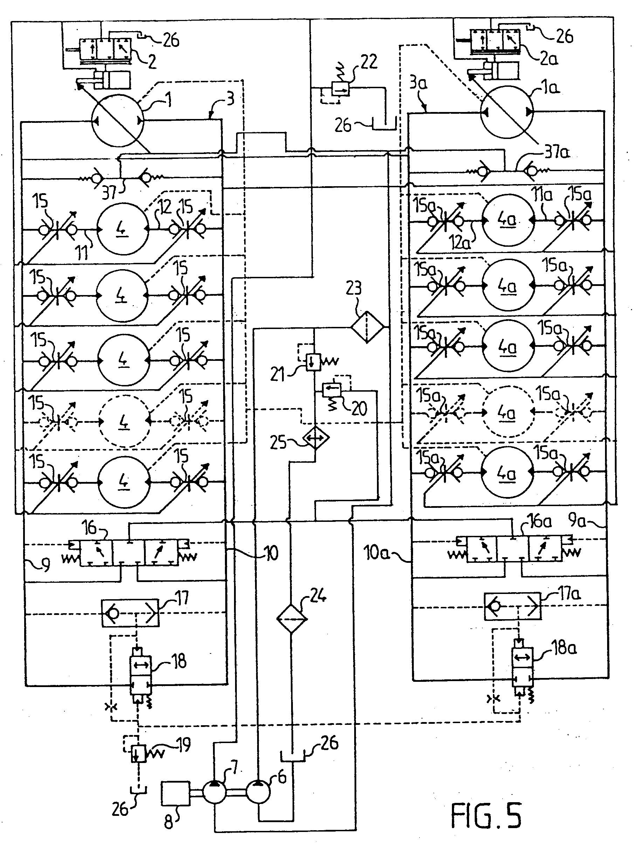

La figure 5 représente la même transmission en configuration de virage par roues directrices. Le virage est obtenu par suite d'une action sur l'organe de commande 27 (figures 1 à 3) relié lui-même mécaniquement à la direction qui est de préférence assistée hydrauliquement. Les pompes 1, 1a débitent alors sur le même circuit, les organes 13, 14 sont totalement ouverts et les débits se répartissent indépendamment sur chacun des moteurs hydrauliques 4, 4a en fonction de leur besoin qui est variable et donné par leurs vitesses elles-mêmes imposées par le virage. Tout se passe alors, selon la figure 5, comme si les boucles 3 et 3a étaient reliées directement entre elles par leurs côtés HP et BP. Les pompes 1, 1a débitent alors sur une même ligne de pression qui alimente l'ensemble des n moteurs hydrauliques 4, 4a.

La figure 4 schématise également la transmission en configuration de mixage des deux possibilités. Dans ce cas, le virage est réalisé par braquage des roues commandé à partir de l'organe de commande 27, d'une part, et par un apport complémentaire obtenu par un dérapage commandé par la variation différentielle des cylindrées des pompes 1, 1a et le pilotage simultané des organes 13, 14, d'autre part. Au braquage obtenu par pivotement des roues, s'ajoute le dérapage obtenu par variation des cylindrées des pompes 1, 1a (en principe en plus pour la pompe reliée au côté extérieur au virage et en moins pour la pompe reliée au côté intérieur au virage). Les organes 13, 14 sont alors en position intermédiaire admettant un débit contrôlé, commun aux deux circuits, autorisant une différence de pression par étranglement partiel.

Dans tous les modes de réalisation, les moteurs hydrauliques 4, 4a peuvent être des moteurs rapides, à cylindrée fixe ou variable, associés à des moyens de réduction de la vitesse et de multiplication du couple débrayables tels que 29, 29a ou couplés entre eux pour constituer un système tel que 40, 41, 38, 39, 36, 46 (figure 7). Ce système d'entraînement des quatre roues avant du véhicule de la figure 3, représenté en détail à la figure 7, constitue un récepteur hydraulique à grande plage de variation, pour des applications nécessitant des rapports de transmission élevés. Le moteur hydraulique 40, débrayable du moteur hydraulique 41 par un embrayage 39, apporte un couple variable, proportionnel à sa cylindrée elle-même variable ; ce couple, multiplié par le rapport de réduction d'un réducteur 38, s'ajoute au couple fourni par le moteur hydraulique 41. L'ensemble de ces couples est transmis aux roues 35, 35a par l'intermédiaire de réducteurs de roue 36, 36a. Les roues 35, 35a et leur réducteur de roue intégré 36, 36a sont débrayables grâce à un embrayage 47.

## Revendications

1. Véhicule dont chacune des roues indépendantes (5, 5a) d'au moins deux paires est entraînée par au moins un moteur hydraulique (4, 4a) faisant partie d'une transmission hydrostatique de puissance, l'entrée (11, 11a) et la sortie (12, 12a) de chaque moteur hydraulique (4, 4a) étant reliées respectivement à une canalisation d'alimentation (9, 9a) en fluide hydraulique en haute pression et à une canalisation de retour (10, 10a) de fluide hydraulique en basse pression, véhicule dans lequel les canalisations d'alimentation (9) et de retour (10) qui sont associées aux moteurs hydrauliques (4) des roues (5) situées sur un premier côté du véhicule forment une première boucle en circuit fermé (3) tandis que les canalisations d'alimentation (9a) et de retour (10a) qui sont associées aux moteurs hydrauliques (4a) des roues (5a) situées sur le deuxième côté du véhicule forment une deuxième boucle en circuit fermé (3a), et dans lequel la transmission hydrostatique de puissance comprend dans chacune des boucles (3, 3a) au moins une pompe hydraulique (1, 1a) à cylindrée variable dont l'aspiration et le refoulement sont reliés respectivement à la canalisation de retour (10, 10a) et à la canalisation d'alimentation (9, 9a) de la boucle (3, 3a) considérée ; caractérisé en ce que le véhicule comprend au moins une paire de roues directrices (5, 5a) et des moyens (13, 13a) permettant de relier, par des passages de sections respectives réglables, ou d'isoler l'une de l'autre d'une part les canalisations d'alimentation (9, 9a) des deux boucles (3, 3a) et d'autre part les canalisations de retour (10, 10a) des deux boucles (3, 3a) et en ce que le véhicule comprend en outre des moyens permettant de régler les cylindrées respectives des pompes hydrauliques (1, 1a) de façon identique pour la configuration de progression en ligne droite ou en virage par roues directrices et de manière différentielle pour la configuration de progression en virage par dérapage, par mixage des deux types de direction, ou pour la configuration de pivot autour du centre de gravité du véhicule.

2. Véhicule selon la revendication 1, caractérisé en ce que les roues motrices (5, 5a) sont mécaniquement et hydrauliquement débrayables, chaque moteur hydraulique (4, 4a) étant précédé et suivi d'isolateurs hydrauliques (15, 15a) et muni d'un isolateur sur le drainage (46) qui l'isolent automatiquement lorsque la roue entraînée par ce moteur ou ce moteur lui-même devient déficient ou lors d'une intention de réduire le nombre de paires de roues motrices.

3. Véhicule selon l'une des revendications 1 et 2, caractérisé en ce que les roues motrices (5, 5a) sont contrôlées en couple et en vitesse, chaque moteur hydraulique (4, 4a) étant régulé par le régulateur hydraulique (15, 15a) monté sur la ligne haute pression ou basse pression en cas de manque d'adhérence et de patinage d'une ou de plusieurs roues.

4. Véhicule selon l'une quelconque des revendications 1 à 3, caractérisé en ce qu'une ou plusieurs paires de roues peuvent être débrayées et avoir en moyenne et grande vitesse un nombre de paires de roues motrices réduit.

5. Véhicule selon l'une quelconque des revendications 1 à 4, caractérisé en ce que la commande de la transmission complète, des susdits moyens associés et de l'orientation des roues directrices est gérée et pilotée par au moins un micro-processeur permettant la gestion complète de toutes les fonctions telles que : ligne droite, virage par roues directrices, virage par dérapage, pivot, virage par direction mixte, contrôle du patinage, découplage de paires de roues motrices, modes dégradés...

6. Véhicule selon l'une quelconque des revendications 1 à 5, caractérisé en ce que les moteurs hydrauliques sont situés dans les roues, en libérant au maximum le volume utile de la caisse.

7. Véhicule selon la revendication 6, caractérisé en ce que les moteurs hydrauliques dans les roues sont des moteurs à fort couple conduisant à une faible inertie de la transmission, favorable aux phases d'utilisation transitoires telles que : accélération, décélération, amorces de virage par dérage ou direction mixte.

8. Véhicule selon l'une quelconque des revendications 1 à 7, caractérisé en ce que le dimensionnement des générateurs de gavage de la transmission est optimisé par deux pompes dont les débits sont adaptés au besoin de gavage par sommation des débits des deux pompes ou par l'utilisation du débit unique d'une seule pompe de gavage, le débit de la seconde étant alors dirigé vers le réservoir sans pression.

9. Véhicule selon la revendication 8, caractérisé en ce que le complément de gavage ponctuel est fourni par une pompe déjà installée sur le véhicule pour une autre fonction.

10. Véhicule selon l'une des revendications 8 et 9, caractérisé en ce que ce complément de gavage est fourni par la pompe de la transmission d'entraînement de la ventilation.

## Claims

1. A vehicle with at least two pairs of independent wheels (5, 5a), each of them being driven by at least one hydraulic motor (4, 4a) which is part of a power hydrostatic transmission,
the input (11, 11a) of each hydraulic motor (4, 4a) being respectively linked to a hydraulic fluid feed pipe (9, 9a) at high pressure and to a hydraulic fluid return pipe (10, 10a) at low pressure, a vehicle in which the feed pipes (9) and return pipes (10) which are linked to hydraulic motors (4) or wheels (5), located on the first side of the vehicle form a first loop in closed circuit (3) while the feed pipes (9a) and return pipes (10a) linked to hydraulic motors (4a) of wheels (5a) located on the second side of the vehicle form a second loop in closed circuit (3a),
and in which each of loops (3, 3a) of the power hydrostatic transmission comprises at least one hydraulic pump (1, 1a) with a variable cubic capacity whose suction and discharge are respectively connected to return pipe(10, 10a) and feed pipe (9, 9a) of loop (3, 3a) considered; characterised in that the vehicle comprises at least one pair of driving wheels (5, 5a) and the means (13, 13a) to link through passages of respective adjustable sections, or isolate feed pipes (9, 8a) of both loops (3, 3a) the one from the other on the one hand, and return pipes (10, 10a) of both loops (3, 3a) on the other hand,
and characterised in that the vehicle also comprises the means enabling the adjustment of the respective cubic capacities of hydraulic pumps (1, 1a) in similar fashion to the configuration of the progression in a straight line or in the bends by means of driving wheels and differentially for the configuration in progression in skid-steering, by mixing both types of steering, or for the configuration of pivoting around the vehicle's centre of gravity.

2. A vehicle according to claim 1, characterised in that driving wheels (5, 5a) can be mechanically and hydraulically disengaged, each hydraulic motor (4, 4a) being preceded and followed by hydraulic insulators (15, 15a) and fitted with an insulator on draining (46) which automatically isolate when the wheel is driven by this motor or when this motor fails or when the reduction of the number of pairs of driving wheels is wished.

3. A vehicle according to one of claims 1 and 2, characterised in that the torque and speed of driving wheels (5, 5a) are controlled, each hydraulic motor (4, 4a) being regulated by hydraulic regulator (15, 15a) mounted on the high pressure or low pressure line if one or more wheels do not adhere or skid..

4. A vehicle according to any of claims 1 to 3, characterised in that one or more pairs of wheels can be disengaged and in that the number of pairs of driving wheels can be reduced in medium and high speed.

5. A vehicle according to any of claims 1 to 4, characterised in that the complete transmission command of the said associated means and of the driving wheel orientation is managed and monitored by at least one microprocessor enabling the total management of all the functions such as : straight line, bend by driving wheels, skid-steering, pivoting, bend by mixed steering, skidding control, decoupling of driving wheel pairs, degraded modes, etc ...

6. A vehicle according to any of claims 1 to 5, characterised in that the hydraulic motors are located in the wheels, the body useful volume being freed at a maximum.

7. A vehicle according to claim 6, characterised in that the hydraulic motors in the wheels are high torque motors with a transmission low inertia, adapted to the phases of transient utilisation such as : acceleration, deceleration, starting skid-steering or bend with mixed steering.

8. A vehicle according to any of claims 1 to 7, characterised in that the dimension of the transmission feeding generators is optimised by two pumps whose outputs are suited to the feeding need by adding the output of both pumps or by using the unique output of one feeding pump only, the flow rate of the second one being then directed towards the receiver without pressure.

9. A vehicle according to claim 8, characterised in that the punctual feeding complement is provided by a pump already installed on the vehicle for any other function.

10. A vehicle according to any of claims 8 and 9, characterised in that the feeding complement is provided by the pump of the ventilation driving transmission.

## Patentansprüche

1. Fahrzeug, an dem jedes unabhängige Rad (5, 5a) von mindestens zwei Radpaaren von mindestens einem Hydromotor (4, 4a) angetrieben wird, welcher ein Element eines hydrostatischen Getriebes bildet; der Eingang (11, 11a) und der Ausgang (12, 12a) jedes Hydromotors (4, 4a) sind jeweils mit einer Zulaufleitung (9, 9a) für Hydraulikflüssigkeit unter Hochdruck sowie mit einer Rücklaufleitung (10, 10a) für Hydraulikflüssigkeit unter Niederdruck verbunden. In dem Fahrzeug bilden die Zulaufleitungen (9) und die Rücklaufleitungen (10), welche mit den Hydromotoren (4) der auf einer ersten Seite des Fahrzeugs liegenden Räder (5) verbunden sind, eine erste Schleife in geschlossenem Kreislauf (3), während die Zulaufleitungen (9a) und die Rücklaufleitungen (10a), welche mit den Hydromotoren (4a) der auf der zweiten Seite des Fahrzeugs liegenden Räder (5a) verbunden sind, eine zweite Schleife in geschlossenem Kreislauf (3a) bilden. Das hydrostatische Getriebe umfaßt in jeder Schleife (3, 3a) mindestens eine Hydropumpe (1, 1a) mit variablem Hub, welche saug- und druckseitige jeweils mit der Rücklaufleitung &10, 10a) und mit der Zulaufleitung (9, 9a) der entsprechenden Schleife (3, 3a) verbunden ist. Das Fahrzeug ist dadurch gekennzeichnet, daß es über mindestens ein Leitradpaar (5, 5a) sowie über Vorrichtungen (13, 13a) verfügt, welche es ermöglichen, einerseits die Zulaufleitungen (9, 9a) der beiden Schleifen (3, 3a) und andererseits die Rücklaufleitungen 10, 10a) der beiden Schleifen (3, 3a) anhand von jeweils verstellbaren Querschnittübergängen zu verbinden oder voneinander zu isolieren, und daß das Fahrzeug außerdem mit Vorrichtungen ausgestattet ist, die es ermöglichen, die entsprechenden Hübe der Hydropumpen (1, 1a) identisch für die Konfiguration des Geradeausvortriebs oder der Kurvenfahrt mit Leiträdern, oder unterschiedlich für die Konfiguration der "Rutschsteuerung" in der Kurve, durch Kombinieren beider Lenkarten oder für die Konfiguration des Schwenkens um den Schwerpunkt des Fahrzeugs einzustellen.

2. Fahrzeug gemäß Patentanspruch 1, dadurch gekennzeichnet, daß die Triebräder (5, 5a) mechanisch und hydraulisch entkuppelbar sind, wobei jedem Hydromotor (4, 4a) ein hydraulischer Isolator (15, 15a) vor- und nachgeschaltet ist, mit einem Isolator auf der Drainagevorrichtung (46), welche diese automatisch isoliert, wenn das von diesem Motor angetriebene Rad oder dieser Motor selbst ausfällt, oder wenn beabsichtigt wird, die Zahl der Triebradpaare zu reduzieren.

3. Fahrzeug gemäß einem der Ansprüche 1 und 2, dadurch gekennzeichnet, daß das Moment und die Drehgeschwindigkeit der Triebräder (5, 5a) kontrolliert sind, wobei jeder Hydromotor (4, 4a) über den auf der Hochdruck- oder Niederdruckleitung montierten hydraulischen Regler (15, 15a) bei mangelnder Bodenhaftung oder bei Schlupf von einem Rad oder von mehreren Rädern reguliert wird.

4. Fahrzeug gemäß einem der Ansprüche 1 bis 3, dadurch gekennzeichnet, daß eine oder mehrere Radpaar(e) entkuppelt werden und bei mittlerer und hoher Geschwindigkeit eine reduzierte Triebradpaarzahl haben kann (können).

5. Fahrzeug gemäß einem der Ansprüche 1 bis 4, dadurch gekennzeichnet, daß der Antrieb des kompletten Getriebes, der oben genannten, dazugehörenden Vorrichtungen und der Lenkung der Leiträder von mindestens einem Mikroprozessor verwaltet und gesteuert werden, welcher die komplette Steuerung aller Funktionen wie z.B.: Geradeausfahrt, Kurvenfahrt mit Leiträdern, Kurvenfahrt mit Rutschsteuerung, Schwenken, Kurvenfahrt in Lenkungskombination, Schlupfkontrolle, Entkupplung von Triebradpaaren, degradierter Modus usw. ermöglicht.

6. Fahrzeug gemäß einem der Ansprüche 1 bis 5, dadurch gekennzeichnet, daß die Hydromotoren in den Rädern montiert sind und so ein maximales Nutzvolumen im Kasten freigeben.

7. Fahrzeug gemäß Anspruch 6, dadurch gekennzeichnet, daß die Hydromotoren in den Rädern ein starkes Moment aufweisen und so zu einer niedrigen Inertie des Getriebes führen, welches für transitorische Anwendungen wie z.B.: Beschleunigung, Bremsverzögerung, Anlauf von Kurvenfahren mit Rutschsteuerung oder kombinierter Lenkung günstig ist.

8. Fahrzeug gemäß einem der Ansprüche 1 bis 7, dadurch gekennzeichnet, daß die Dimensionierung der Aufladeerzeuger des Getriebes durch zwei Pumpen optimiert ist, deren Mengendurchsätze den Aufladeanforderungen durch Summierung der Mengendurchsätze beider Pumpen oder durch Benutzen des alleinigen Mengendurchsatzes von nur einer Aufladepumpe angepaßt sind, während die zweite Pumpe auf den drucklosen Behälter gerichtet ist.

9. Fahrzeug gemäß Anspruch 8, dadurch gekennzeichnet, daß die punktuelle Aufladeergänzung über eine schon für eine andere Funktion im Fahrzeug installierte Pumpe gewährleistet wird.

10. Fahrzeug gemäß einem der Ansprüche 8 und 9, dadurch gekennzeichnet, daß die Aufladeergänzung über die Antriebspumpe des Ventilators gewährleistet wird.
